# EUROPEAN PATENT SPECIFICATION

(11) **EP 3 482 630 B1**
(45) Date of publication and mention of the grant of the patent: **30.06.2021**
(21) Application number: 17201461.5
(22) Date of filing: 13.11.2017
(51) Int. Cl.: A01M 1/00

(54) **METHOD, SYSTEM AND COMPUTER PROGRAM FOR PERFORMING A PEST FORECAST**
VERFAHREN, SYSTEM UND COMPUTERPROGRAMM ZUR DURCHFÜHRUNG EINER SCHÄDLINGSPROGNOSE
PROCÉDÉ, SYSTÈME ET PROGRAMME INFORMATIQUE PERMETTANT D'EFFECTUER UNE PRÉVISION DES INFESTATIONS DE RAVAGEURS

(43) Date of publication of application: 15.05.2019
(73) Proprietor: EFOS d.o.o., 4225 Hrusevje (SI)
(72) Inventor: STEFANCIC, Mateja, 4225 Hrusevje (SI); MELE, Katarina, 4225 Hrusevje (SI); STEFANCIC, Matej, 4225 Hrusevje (SI); SUC, Dorjan, 4225 Hrusevje (SI)
(74) Representative: Balder IP Law, S.L.

(56) References cited:
- WO-A1-2015/111007
- WO-A1-2017/066513
- WO-A1-2017/120189
- WO-A1-2017/172883
- US-A1- 2016 290 912
- US-A1- 2017 112 116

## Description

### TECHNICAL FIELD

The present invention relates to the field of pest monitoring and control. More particularly, it refers to methods and systems for monitoring pests formed by insects, such as flying insects, and for performing a pest forecast.

### STATE OF THE ART

Monitoring of pests is the basis of all modern technologies of food production. In order to be competitive, contemporary agricultural techniques require intensive control of possible pests that may affect crops. In the past decade insect monitoring methods have evolved considerably with rising popularity of integrated pest management as one of the main drivers of the change. Where applicable, insect pests are monitored with pheromone based traps which require tedious manual work of checking traps every few days. Thus, the amount of insects stuck on the trap usually gives an idea of the type and relevance of the potential pest.

Manual field scouting is still a predominant way of pest insect monitoring. Conventional pheromone lure traps are placed in the fields, and the number of pests that are caught is periodically observed. Traditionally, growers (or technicians, advisers, agronomists, etc.) must inspect the traps on a regular basis every few days. The field visits provide data on how many insects were caught, which allows for assumptions about the dynamics of targeted insect population in the field. When the pest development stage which is most suitable for taking chosen crop protection measures is estimated based on the population of the targeted pest in the traps, the grower makes the decision to spray the crops with the appropriate insecticide or uses other means of crop protection (Prasad and Prabhakar, 2012). However, the conventional approach is not optimal. Since the traps are inspected only once or twice per week, and it usually takes some time to manually compile and process the data, the reaction time to pest pressure is approximately 7 to 10 days.

With the recent development of new crop protection products that must comply with increasingly stricter food safety regulations it is necessary to apply crop protection within a very limited time window while targeted pest is in certain development stages. Using such crop protection products outside recommended time window (usually 3-5 days) significantly lowers their efficiency and increases the risk of running into pest resistance. The result of the conventional method of pest monitoring is that pesticides are being used inappropriately, usually in larger quantities than recommended past the optimal time, when the pest is already grown to the stage where crop protection application causes greater risk for development of pest resistance to crop protection product. If growers were alerted in real-time when the number of pests reached the suitable developmental stage, insecticide efficiency could increase by more than 30 percent (Chen, Zhao and Shelton, 2007). Additionally, inspecting the traps every few days causes considerable cost such as personnel time and fuel. For large growers and advisers, which can have even several hundred or even thousands of traps, daily field visits (trap inspections) are therefore not economically viable as they demand considerable amounts of resources. Such visits are also not sustainable, especially in terms of CO₂ emissions and labour.

Furthermore, there is a number of factors that affect the consistency of manual monitoring, such as national holidays and staff vacation, bad weather conditions that prevent (or demotivate) staff to do on-site visit, general motivation of staff (staff with lower motivation is more prone to make mistakes identifying and counting pests) and staff qualification (considerable costs and efforts are needed to educate staff in correctly identifying the pest species). Inconsistency caused by the above-mentioned reasons results in mistimed monitoring, collecting incorrect or misleading data that consequently adds to the complexity of crop protection decision making and leads to inappropriate crop protection measures. There are also phenology models, also known as degree-day models, which are designed to predict or understand insect development. Insects are heterothermic organisms so their growth is related to the environmental temperature. This property can be exploited for building models that simulate the development stage of an insect. The model is built using the results of the observations made on a population grown in a controlled environment (e.g. the laboratory). The analysis allows to find the parameter function of a system of differential equations which describes the evolution of every stage of the pest life cycle. The major difficulty in the use of these models is their need of measurements of relevant environmental variables and to take into account human intervention like different crop protection actions (like insecticide spraying). There are also genetic differences between the pest populations from different regions that can influence pest population behaviour significantly.

The problem of time-consuming physical inspection of traps is addressed in Slovenian patent SI23715, which discloses a system for remote automatic detection and monitoring the occurrence of insect pests. It is based on a trap comprising electronics including a wireless communication module. The trap communicates with a server, at which images captured at the trap are downloaded and processed with software for automated image recognition. Similarly, United States patent US7401436B2 discloses a flying insect capturing apparatus and a remote monitoring method and system using the capturing apparatus. Further state of the art documents relevant in the art would be: US 2017/112116 A1 and WO 2017/172883 A1. However, there is still a need for estimating the optimal time window for making important decisions, such as the use of crop protection products.

### DESCRIPTION OF THE INVENTION

The system and method described in the present disclosure intends to solve the shortcomings of prior-art methods of foreseeing the evolution of pests, by producing an automated forecast of pest population taking into account different data, such as data collected in a certain time period by a large network of automated traps (i.e. insect traps). Other data, such as weather data (for example retrieved from the automated traps) and weather forecast, may also be taken into account. The data collected by the automated traps comprises pictures taken at those traps. These pictures are processed applying image recognition algorithms, as a result of which the number of pest individuals on each picture is estimated. By applying advanced artificial intelligence algorithms, an automated forecast of pest population is produced. A pest forecast for different pests is thus obtained. The forecast is given for one or more geo-locations of interest. In embodiments of the invention, the geo-location of interest is an area defined by certain radius from a trap/location for which forecasting is going to be performed. In embodiments of the invention, the geo-location of interest is a cluster of traps not necessarily disposed within a certain radius; for example, the cluster of traps may comprise all traps that belong to the same fields or cooperative or owner). The forecast may take into account only the traps that belong to a geo-location of interest; or the traps that belong to the geo-location of interest plus traps in a neibourhood of the geo-location of interest (for example within a certain radius); or all traps which are sending data, that is to say, including traps beyond those in the neibourhood of the geo-location of interest). The forecast can also be determined for other points within a specified area by using interpolation methods.

In the present disclosure, the term "insect" is generally used to refer to any type of pest that may affect crops. While crops are typically affected by insect pests, one skilled in the art knows that other animals, such as other arthropods, molluscs or worms, may affect crops in the form of a pest. Non-limiting examples of insects that may constitute a pest affecting a crop are: Cotton bollworm (H. armigera), Codling moth (C. pomonella), Navel Orange Worm (A. transitella), European grape berry moth (E. ambiguella), Diamond back moth (P. xylostella), Mediterranean fruit fly (C. capitata), Silver Y Moth (A. gamma), Spotted wing drosophila (D. suzukii), among others.

A first aspect of the invention refers to a method according to claim 1.

The recently preprocessed data may refer to data captured and preprocessed within the last 24 hours, for example within the last 6 hours, or the last 12 hours, or the last 1 hour, or the last 30 minutes. The preprocessing may comprise the generation of features encoding said estimated number of identified insects in each trap, said metadata associated to the pictures and said other data captured at each trap.

In embodiments of the invention, the other data captured at each trap comprises temperature and humidity data taken by sensors disposed at the respective traps.

In embodiments of the invention, the method further comprises sending through communications means data from external sources to said remote end located in the cloud, said data comprising weather information and forecast. The data provided by external sources may also comprise historic pest migration data.

In embodiments of the invention, the method further comprises sending through communications means data provided by trap users, said data comprising crop protection applied to traps of respective users.

In embodiments of the invention, the stage of estimating a number of insects at each trap within a certain period of time further comprises: updating and training said predictive model with training data; manually verifying and correcting possible errors in the estimation of number of pests; enriching said training data with the updated number of pests and with the manually corrected errors in the estimation of number of pests.

In embodiments of the invention, the stage of preprocessing comprises at least one of the following: data cleaning, automatic data labelling, automatic trend detection, missing data handling and automatic outlier detection and correction.

In embodiments of the invention, the performed pest forecast is in the form of either a numerical prediction or a provision of a development stage of the observed pest in a time interval or a crop protection recommendation.

In embodiments of the invention, the stage of applying decision making algorithms for performing a pest forecast further comprises: feeding a machine learning model with said historical data; making numerical or qualitative predictions from the result of applying said machine learning model; storing said predictions in data storage means; enriching said decision making algorithms with said predictions. The machine learning model may comprise at least one of the following techniques: classification machine learning, approaches to combine several models (e.g. ensemble learning) and cost sensitive learning.

In embodiments of the invention, the pest forecast performed for a trap is based at least on the traps belonging to a geo-location of interest, the geo-location of interest being an area defined by certain radius from the location of said trap or a cluster of traps not necessarily disposed within a certain radius.

A second aspect of the invention refers to a system for performing a pest forecast, according to claim 11.

In embodiments of the invention, the communication means are wireless.

In embodiments of the invention, at least some of said plurality of traps comprises weather sensors configured to gather weather data from the trap.

A third aspect of the invention refers to a computer program according to claim 14.

As opposed to pure biological models/degree-days models based on weather data, and its influence determined through controlled experiments (sometimes enhanced with pest counts based on manual field scouting), the present disclosure uses constant (i.e. daily) verification of traps data based on actual catches. This permits to adjust forecasting models based on biology.

The invention provides several advantages, such as the possibility of applying crop protection measures in the most optimal way. That ensures sustainable use of crop protection products and minimizing the risk of pest resistance.

This approach provides more accurate forecast than standard approaches. This is of course crucial for accurate pro-active crop protection decisions.

Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided.

The drawings comprise the following figures:
Figure 1 shows a schematic representation of a system for carrying out the method of the invention, in which a plurality of insect traps for capturing pest data is illustrated. The data captured at the traps is processed at a remote end together with other optional input data, such as data from external sources and data provided by users. A pest forecast based on those input data is obtained.
Figure 2 shows a flowchart of a method of performing pest forecast according to an embodiment of the invention.
Figure 3 shows an image taken from a trap, to which the visual processing & learning depicted in figure 2 has been applied.

### DESCRIPTION OF A WAY OF CARRYING OUT THE INVENTION

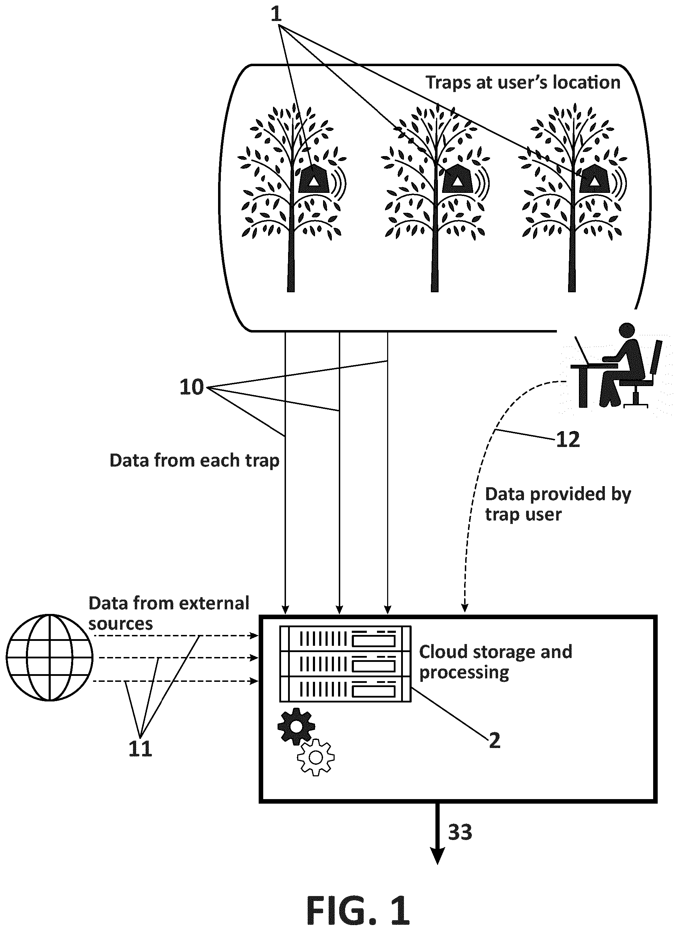

Figure 1 shows a schematic representation of a plurality of insect traps 1 disposed at locations of the users (of a same or different users), such as in the cultivation fields or crops. Each user may have one or more traps 1. In the figure, only three traps 1 are shown. This is merely illustrative and there may be hundreds of traps 1 configured for sending data to a remote end. The traps 1 are conventional and are out of the scope of the present invention. Each trap 1 has a housing. The housing is preferably optimized for luring insects. Thus, a lure, such as a pheromone lure, may be disposed in the proximity of a sticky surface kept in each trap 1, so as to attract a specific type of insect in such a way that the insect is stuck on the sticky surface. In other words, a sticky element on which insects may be trapped is disposed within the housing.

Each trap 1 also comprises electronic equipment, including at least one camera for taking pictures of the insects captured by the trap, geo-location means, such as a GPS module, for retrieving the location of the trap 1, and communications means, such as a communication module, for sending the captured pictures to a remote end 2 for further storage and processing. A skilled reader will understand that the term GPS stands for Global Positioning System and that the GPS module may be implemented by means of any positioning system, including but without limitation, US GPS, Glonass and Galileo, for example. Geo-location means provides spatial data about traps. Spatial data can be either geo-location based data (for example, all traps within certain radius from the trap/location for which forecasting is going to be performed) or attribute data (for example, all traps/location which belong to the same cluster of traps, for example all traps that belong to the same fields or cooperative or owner). In other words, spatial data is used for selecting the traps 1 from which relevant data (insects, weather...) is to be used. Spatial data serves at establishing a criterion for selection of target traps. Spatial data/ geo-references may be used to determine which traps need to be taken into consideration for pest forecasting. The communication means are preferably wireless, although they may be wired, and are implemented over well-known data communication protocols, such as, but without limitation, WiFi, Bluetooth, UMTS, LTE or the like. At each trap 1, the at least one camera takes pictures either periodically, for example at pre-established time intervals, or non-periodically. The sending of pictures to the remote end 2 may also be either periodically or non-periodically.

The electronic equipment may additionally include weather sensors, such as one or more temperature sensors and/or one or more humidity sensors, for gathering weather data from the traps 1. This weather data may be captured periodically or non-periodically. In this respect, the weather conditions are very important in the current method for establishing a pest forecast, taking into account that biology has major influence on future pest population as well as on damage done to the crops. For example, if temperatures are too hot or too cold, they will play a significant role on future pest population (a typical key indicator is degree-days). Besides, inventors have observed that the weather data also plays a critical role in susceptibility of the plant to the damage - for example there may be significant pest population, however a targeted crop is not in the stage where such pest population would do any damage (fruits have not developed yet, among other stages).

The electronic equipment also includes powering means, such as one or more energy modules, for feeding energy to the electronic components comprised in a corresponding trap 1. Non-limiting examples of powering means are solar cells, battery and/or electricity plug. The electronic equipment may additionally include basic image processing means, for example for detecting when a trap requires cleaning, and/or data storage means, such as one or more memories, for example for storing pictures taken at a trap 1, weather data gathered by weather sensors and/or other data. Each trap 1 may also comprise a trap self-cleaning mechanism, for cleaning the trap without requiring a person to travel to the trap location.

In sum, each trap 1 sends the remote end 2 different data 10 captured at the trap, such as: pictures of trap contents (i.e. caught insects, if any) and associated metadata, such as the time at which the pictures were taken; the GPS coordinates of the respective trap from which pictures are sent; and temperature and humidity data taken at the respective trap, if the trap 1 has weather sensors. These data are preferably sent periodically, such as once per day or once every time period, such as once every 1 hour or once every 30 minutes. These data from traps 1 are represented in figure 1 with arrows 10.

Figure 1 also illustrates a remote end 2 to which data 10 from each trap 1 are sent for further processing. The remote end 2 may be embodied as a computer means, such as any means comprising processing capacity and storage capacity, such as a computer or a computer cluster. In a preferred implementation of the invention, the computer means of the remote end 2 are located in the cloud, wherein cloud storage and processing capacity are allocated. The computer means may work as a server.

In order to perform the calculation of pest forecast of the present invention, the remote end 2 -more precisely, the computer means of the remote end 2- may also be fed with other data, if available, in addition to the data 10 provided by the traps 1. External sources, that may be free sources or sources subject to payment, may provide weather information and forecast, such as temperature, precipitation, rainfall and/or wind velocity. External sources may also provide data, such as historic pest migration data, from users of a farm management system. For example, some pests are known migrators and those trends can be observed with a network of traps over a larger area and can be taken into account in future forecasting. Data from external sources are represented in figure 1 with arrows 11.

The remote end 2 may also be fed with data 12 provided by trap users, such as crop data provided by the user of a trap (i.e. the grower or corresponding staff) and/or visual information on pests (e.g. photos, videos). Non-limiting examples of crop data are type, amount and/or time, relating to planting and crop protection (such as spraying, lure changing, sticky surface changing, mating disruption, biocontrol, etc). Pest population is heavily influenced by crop protection. For this reason, getting data regarding crop protection may enhance the success of pest forecasting. These data are represented in figure 1 with arrow 12. As a reader may understand, the provision of these data 12 depends on the availability of the users, as a consequence of which their provision cannot be guaranteed. Therefore, the method of calculation of a pest forecast may be performed without these data 12 provided by trap users. In embodiments of the invention, this data 12 may be entered by users (for example either through a web page or through an electronic application or software application).

At the computer means of the remote end 2, all the received data (at least data from traps 10, optionally also data from external sources 11 and/or data provided by users 12) are processed and stored. The processing and storage is preferably performed in the cloud. In particular, processing means may perform data processing, computer vision techniques and machine learning algorithms in order to forecast future insect occurrences from current and historically collected data. In particular, a forecast 33 of pest occurrences is performed for every trap 1 for the next N days, N being a natural number. In embodiments of the invention, N is selected as following: 1 ≤ N ≤ 30, such as 1 ≤ N ≤ 21, or 1 ≤ N ≤ 15 or 1 ≤ N ≤ 7. The forecast 33 may be subject to probabilities and may be based on interpolated data from traps. The forecast 33 takes into account at least one geo-location of interest, by using at least the data 10 obtained from a plurality of traps 1. Data from external sources 11 and data provided by trap users 12 may optionally be used. The forecast may take into account a plurality of geo-locations of interest. The forecast 33 performed for a trap 1 may take into account only the traps that belong to a geo-location of interest; or the traps that belong to the geo-location of interest plus traps in a neibourhood of the geo-location of interest (for example within a certain radius); or all traps 1 which are sending data 10, that is to say, including traps beyond those in the neibourhood of the geo-location of interest). The forecast may be performed for locations different from the trap locations. In a particular embodiment, representing the simplest scenario, the prediction (forecast) is done by simply interpolating the data of the traps 1 taken into account. In other embodiments, predictions (forecast) can be extended by weighting according to the distance between traps and/or according to confidences of trap predictions. In other embodiments, more complicated schemes for combining predictions (forecast) are used, such as schemes typically used in machine learning.

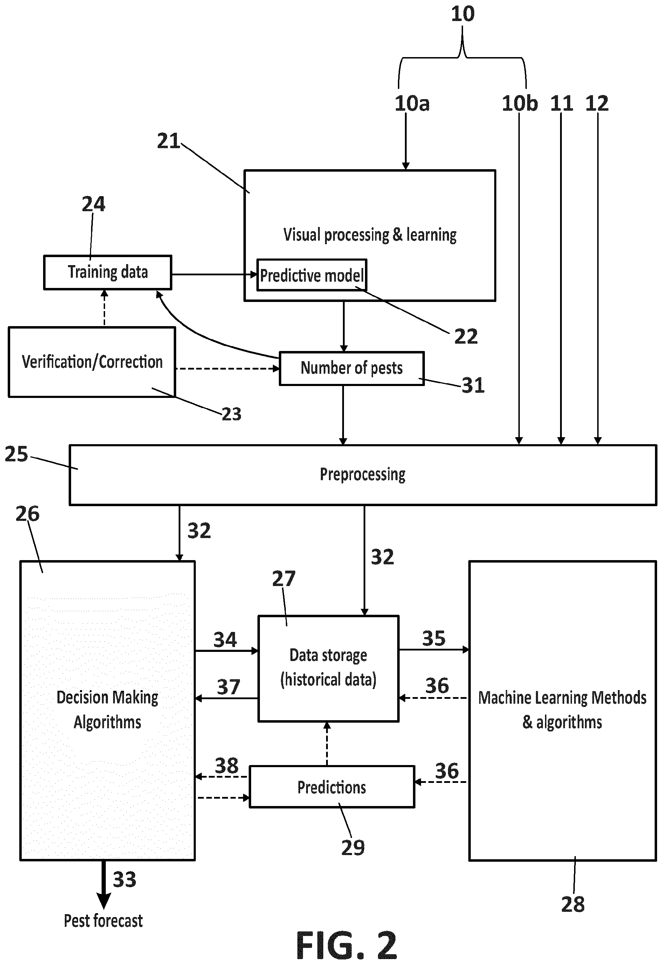

Forecast 33 can take different forms, depending on the user preferences and the intended use of predictions. Thus, the prediction may be a numerical prediction of expected pest density in the time interval (for example in the next few days, or next week...). As a matter of example, a numerical prediction may be: "It is expected that 5 insects will be observed tomorrow", or "It is expected that there will be 0.7 insects per square meter in the next week". This can be seen as the simplest form of prediction. A second, more sophisticated version of a numerical prediction may define the expected probability distribution of pest, e.g. normal distribution with a certain mean and standard deviation. This second form of prediction is a qualitative description of pest population, such as steady/increasing/decreasing trend of population of the pest, in the next time period (i.e. several days, one or more weeks...). It is remarked that qualitative predictions can also have varying precision (like increasing, decreasing or steady trend, or possibly several (for example 5) different values of trend intensity). A third form of the prediction 33 is the provision of the development stage of the observed pest in a time interval, for example egg, larva, pupa or adult development stage. A fourth form of the prediction 33 is the crop protection recommendation in a time interval, e.g. spraying necessary or not necessary. All four types of forecasts 33 can contain additional information, like probability or estimate confidence, prediction horizon, or different estimates for different prediction horizons. Some or all of the four types of forecasts can be obtained from numerical predictions and optionally using some additional biological models. However, predictions other than purely numerical ones may perform better in terms of prediction power or in terms of user satisfaction (see for example D. Šuc, D. Vladušič, I. Bratko, Qualitatively faithful quantitative prediction, Artificial Intelligence, 158 (2) (2004), pp. 189-214*).* In sum, the pest population forecast may provide different results, such as number, trend or development stage; may provide a qualitative or quantitative description with varying precision, such as increase/decrease/steady; and may be subject to a certain probability. The different stages for performing pest forecast 33 according to the present disclosure are explained in view of the flowchart illustrated in figure 2.

Regarding figure 2, first, from the data 10 captured at each trap 1, the pictures and associated metadata 10a are fed into a visual processing and learning stage 21. Each image is associated with a unique trap number and a time stamp, so it is known where and when the image was taken. Other data 10b from the data 10 captured at each trap 1, such as GPS coordinates of the respective traps and temperature and humidity data taken at the respective trap, if the trap 1 has weather sensors, are fed to a preprocessing stage 25. At the visual processing and learning stage 21, a number of identified pests 31 in each image of each trap is obtained (that is to say, the number of insects trapped in the corresponding trap). Image recognition techniques identify the number of targeted pests on the image, for example, the number of E. ambiguella or the number of C. capitate, or others. This is done by using a predictive model 22 based on a deep learning approach or on other means of identifying the number of pests from each image. The predictive model comprises net weights and a net structure, which are adapted for a specific pest. In embodiments of the invention, the predictive model is adapted for a specific pest (for example for E. ambiguella). In other words, there is one model per one pest. This typically produces better results. In embodiments of the invention, one general predictive model is used to be trained/adapted to several pests and is adapted for counting the number of those pests in the images. This reduces the time needed to train the model while obtaining as good accuracy of recognition as possible.

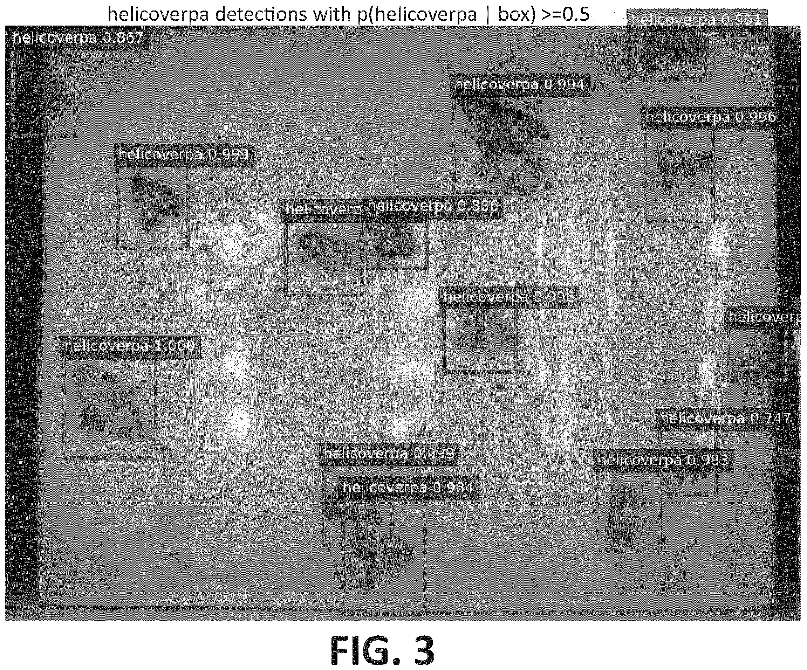

Other standard or customized computer vision techniques might be used here, such as segmentation, classification using local image descriptors, etc. The predictive model 22 is updated/trained with training data 24. The result of the predictive model 22 is a position of each trapped insect in an image, so the total number of insects per image is known 31. As a matter of example, figure 3 shows an image taken from a trap, to which the visual processing & learning stage 21 has been applied. In this particular example, a predictive model 22 for detecting a pest called helicoverpa has been applied. In the image, squares around the identified pest refer to helicopverpa detections with p(helicoverpa | box) ≥ 0.5. At each square, the estimated probability of the pest being helicoverpa is shown.

The number of identified insects (pests) 31 in each trap and their positions on the sticky plate is obtained in a fully automatic way. Besides, it is possible to manually verify and correct possible errors 23, thus manually correcting the number of pests 31 obtained automatically. Besides, the training data 24 used to update/train the predictive model 22 can be enriched by adding the newly obtained classified/verified/corrected data 23. The predictive model 22 can thus be updated/retrained in order to obtain a model with higher accuracy. Training data 24 to train a model for the first time can be obtained manually, half automatically or automatically (by using a model for visually identification of a similar pest).

Next, the number of identified insects or pests 31 in each trap in a certain period of time T, obtained from the pictures and associated metadata 10a, is, together with the other data 10b 11 12 received by the remote end 2 (as explained in relation to figure 1), inputted to a preprocessing stage 25. The other data may comprise: a) other data 10b captured at each trap 1, including at least GPS coordinates of the respective traps and optionally temperature and humidity data taken by sensors at the respective trap within the period of time T; b) optionally data 11 from external sources, including weather information and forecast and optionally historic pest migration data and/or data from user's farm management system; and c) optionally data 12 provided by trap users (e.g. farmers), such as crop data provided by the user of a trap, such as spraying type and time or time of changing trap lure; and/or visual information on pests (for example photos or videos).

At the preprocessing stage 25, machine learning steps and methods are used. The output of the preprocessing stage 25 is all the available and relevant information per each trap encoded in the way that is most useful for processing with machine learning and decision making algorithms. These machine learning steps and methods at stage 25 include data cleaning, missing data handling and outlier detection and correction. For example, anomalies may be detected and corrected (or corresponding data ignored). For example, if one sensor provides very different reading from the readings of other sensors in a same area, the data from the sensor presenting anomalies is discarded. These steps are typically automatic, but can be also semi-automatic (for example with the intervention of a skilled user or employee of the service provider). Also in the preprocessing stage 25 automatic trend detection and data labeling are performed. They are used to transform knowledge from data into a form that is more useful for next method stages and algorithms or for the end-user. For example, some qualitative patterns in the data can be detected and used, like increasing or decreasing trend in number of pests, or very low temperatures. Besides, at the preprocessing stage 25, automatic generation of features for machine learning is carried out. These generated features encode the available data in the form that is most suitable for processing with machine learning and decision making algorithms. Non-limiting examples of generated features are differences and ratios (e.g. ratio of average evening temperature for the last five days to average evening temperature for the last twenty days), moving averages (e.g. exponential moving average of number of pest), standardized values, etc. In order to generate features, data from external resources 11 and data provided by users 12 may optionally be used. As a result, a set of preprocessed data 32 is obtained, comprising the relevant information per each trap. The pre-processed data 32 comprising information from each trap 1 is stored in data storage means 27 as historical data. A machine learning stage 28 may use these historical data to produce predictions 38 at stage 29. The result 36 of the modelling approaches executed at the machine learning stage 28 may also be stored in data storage means 27. Predictions may also be stored in data storage means 27 and fed into decision making algorithms 26. These predictions 38 are either numerical or qualitative (i.e. pest population trend). Non-limiting examples of numerical predictions include pest number or pest density in some prediction horizons (typically one to ten days) with or without confidence estimates, or probability distribution of expected pest density in one or more prediction horizons. Non-limiting examples of qualitative prediction include qualitative values with varying precision (like increasing, decreasing or steady trend, or possibly several (for example 5) different values of trend intensity), and pest development stage (eggs, 1^{st} stage larvae, ..., adult animals). A skilled person will understand that implementation details of the machine learning stage 28 may vary in different embodiments of the invention. Non-limiting examples of these modelling approaches are: classification machine learning, approaches to combine several models (e.g. ensemble learning) and cost sensitive learning. In embodiments of the invention, classification learning may be used, such as support vector machines to predict the pest density trend in the next N days, from features obtained from the historical data 27. In embodiments of the invention, cost-sensitive learning may be used to penalize different misclassification errors. Calibration with isotonic regression may be used to calibrate the probability estimates and other standard machine learning approaches. In embodiments of the invention, regression learning may be used, like nonlinear regression or gaussian processes, to predict the numerical value (or the probability distribution) of pest density in next few days.

The machine learning predictions 29 and preprocessed data 32 are fed in decision making algorithms in stage 26. Note that this stage 26 can use both the most recent data (denoted by the arrow pointing directly from stage 38), and the historical data 37. The output of the decision making algorithms 26 is the final forecast 33 (e.g. pest density/pressure, trend, pest developments stage). The predictions 38 may be used for optimizing the pest forecast 33 performed at this stage 26. The implementation details of stage 29 can vary in different embodiments of the invention. In fact, although in a preferred embodiment machine learning predictions are used, the final forecast 33 may be performed in a simplified case in which machine learning predictions 29 are trivial or not used at all. This is denoted by an optional arrow 38, meaning that in embodiments of the invention no usage of predictions 29 is made. In this simplest embodiment of the invention, the recent preprocessed data 32 and the historical data 27 are the input of decision making algorithms 26. Typical examples of historical data 27 are history track records of trap catches and temperature data, among others. For example, in stage 25, temperature data can be used, if temperature information is available, to generate different degree-days features, obtained by different parameters of a well-known degree-days model. These features could then be used with decision making algorithms (in stage 26) to output a forecast 33. Instead (or in addition to degree-days models) other biological models, artificial intelligence algorithms or heuristics could be used. In other words, decision making algorithms 26 make forecast 33 about the pest trend, using approaches like the well-known approach "degree days" and other artificial intelligence algorithms and/or biological and/or heuristic models. The result of this stage 26 is stored in data storage means 27 (arrow 34).

In a preferred embodiment of the invention, machine learning predictions 38 (obtained at stage 29) and historical data 37 (stored at block 27) are fed into decision making algorithms in stage 26. Decision making algorithms 26 then use these predictions and data to perform and output the final prediction 33. For example, machine learning predictions of pest number or density and their confidence estimates of all traps are used by decision making algorithms 26 to produce a forecast of pest population trend at one trap or at a specific geo-location. Decision making algorithms may also be used to produce a forecast of pest development stage at a trap or at a specific geo-location based on machine learning predictions of pest population trend and the corresponding confidence estimates of all traps, plus historical data of observed pest population, plus biological models (like degree-days) if available. The decision making algorithm 26 can weigh the data of different traps according to their distance from the geo-location of interest, their confidence estimates, historical correlation, and similar. Machine learning 28 and decision-making 26 algorithms may also combine information from different traps, for example by voting or more sophisticated machine learning approaches.

The traps typically belong to different users or different networks. Some users prefer to share their trap data with others, and other users want their data to remain private. To accommodate such user preferences, the algorithms can just use data of traps that are visible to a specific user.

The pest forecasting method of the present approach is robust. Besides, different data sources are combined. For example, data from one trap is being used also in other traps in at least two respects: First, correlations of traps (for example nearby traps) are modeled and used to improve the quality of the measurements (e.g. data from trap sensors). Second, the reliability of predictions can be improved based on ensemble methods (for example, voting or averaging of many near-by or related traps).

Besides, the data is used to tune and retrain the pest prediction models that are used for online pest forecast. Such tuning or retraining of the models may be done periodically (for example once a month), or non-periodically, depending on the specifics about insects, crop protection, and forecast requirements.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for performing a pest forecast, comprising:
at a plurality of traps (1), capturing data (10) comprising: pictures of trap contents and associated metadata captured for a certain period of time (10a) and other data (10b) comprising GPS coordinates of the respective trap; and sending said data (10, 10a, 10b) through communication means to a remote end (2) located in the cloud;
from the pictures of trap contents and associated metadata (10a) captured at each trap (1), applying a visual processing and learning stage (21) comprising applying a predictive model (22) for estimating a number of identified insects (31) in each trap (1) for said certain period of time; preprocessing (25) at least said estimated number of identified insects (31) in each trap (1), said metadata associated to the pictures and said other data (10b) captured at each trap (1), thus obtaining a set of preprocessed data (32), said preprocessing (25) comprising applying machine learning techniques, said preprocessing (25) comprising the generation of features encoding said estimated number of identified insects (31) in each trap (1), said metadata associated to the pictures and said other data (10b) captured at each trap (1), in a form for processing with machine learning and decision making algorithms;
storing the pre-processed data (32) in data storage means (27), thus keeping historical data along time;
from the recently preprocessed data (32) and the historical data, performing a pest forecast (33) for each trap (1) for the next N days by applying decision making algorithms(26), wherein performing a pest forecast (33) comprises:
feeding (35) a machine learning model (28) with said historical data and obtaining results (36) of the executed model (28);
making numerical or qualitative predictions (29, 38) from the result (36) of applying said machine learning model (28);
storing said predictions in data storage means (27);
enriching said decision making algorithms (26) with said predictions (29).

2. The method of claim 1, wherein said other data (10b) captured at each trap (1) comprises temperature and humidity data taken by sensors disposed at the respective traps (1).

3. The method of either claim 1 or 2, further comprising sending through communications means data (11) from external sources to said remote end (2) located in the cloud, said data (11) comprising weather information and forecast.

4. The method of claim 3, wherein said data (11) provided by external sources also comprises historic pest migration data.

5. The method of any preceding claims, further comprising sending through communications means data (12) provided by trap users, said data (12) comprising crop protection applied to traps of respective users.

6. The method of any preceding claim, wherein the stage of estimating a number of insects (31) at each trap (1) within a certain period of time further comprises:
updating and training said predictive model (22) with training data (24);
manually verifying and correcting possible errors (23) in the estimation of number of pests (31)
enriching said training data (24) with the updated number of pests (31) and with the manually corrected errors (23) in the estimation of number of pests (31).

7. The method of any preceding claims, wherein said preprocessing (25) comprises at least one of the following: data cleaning, automatic data labelling, automatic trend detection, missing data handling and automatic outlier detection and correction.

8. The method of any preceding claims, wherein the performed pest forecast (33) is in the form of either a numerical prediction or a provision of a development stage of the observed pest in a time interval or a crop protection recommendation.

9. The method of claim 1, wherein said machine learning model (28) comprises at least one of the following techniques: classification machine learning, approaches to combine several models (e.g. ensemble learning) and cost sensitive learning.

10. The method of any preceding claims, wherein the pest forecast (33) performed for a trap (1) is based at least on the traps belonging to a geo-location of interest, the geo-location of interest being an area defined by certain radius from the location of said trap or a cluster of traps not necessarily disposed within a certain radius.

11. A system for performing a pest forecast, comprising:
a plurality of traps (1) disposed in different locations in a crop field, each trap (1) comprising a camera for capturing pictures of trap contents, geo-location means for retrieving the location of the respective trap (1) and communication means for sending the captured data;
computer means (2) located in the cloud, said computer means comprising storage and processing capacity;
communication means for exchanging data between said plurality of traps (1) and said computer means (2);
said computer means being configured for:
receiving data (10, 10a, 10b) captured at said plurality of traps (1), said data comprising pictures of trap contents and associated metadata captured for a certain period of time (10a) and other data (10b) comprising GPS coordinates of the respective trap;
from the pictures of trap contents and associated metadata (10a) captured at each trap (1) for a certain period of time (10a), applying a visual processing and learning stage (21) comprising applying a predictive model (22) for estimating a number of identified insects (31) in each trap (1) for said certain period of time;
preprocessing (25) at least said estimated number of identified insects (31) in each trap (1), said metadata associated to the pictures and said other data (10b) captured at each trap (1), thus obtaining a set of preprocessed data (32), said preprocessing (25) comprising applying machine learning techniques, said preprocessing (25) comprising the generation of features encoding said estimated number of identified insects (31) in each trap (1), said metadata associated to the pictures and said other data (10b) captured at each trap (1);
storing the pre-processed data (32) in data storage means (27), thus keeping
historical data along time;
from the recently preprocessed data (32) and the historical data, performing a pest forecast (33) for each trap (1) for the next N days by applying decision making algorithms (26), wherein performing a pest forecast (33) comprises:
feeding (35) a machine learning model (28) with said historical data and obtaining results (36) of the executed model (28);
making numerical or qualitative predictions (29, 38) from the result (36) of applying said machine learning model (28);
storing said predictions in data storage means (27);
enriching said decision making algorithms (26) with said predictions (29).

12. The system of claim 11, wherein said communication means are wireless.

13. The system of any of claims 11-12, wherein at least some of said plurality of traps (1) comprises weather sensors configured to gather weather data from the trap (1).

14. A computer program comprising computer program code means adapted to perform the steps of the method according to any of claims from 1 to 10 when said program is run on a computer, a digital signal processor, a field-programmable gate array, an application-specific integrated circuit, a micro-processor, a micro-controller, or any other form of programmable hardware.

## Patentansprüche

1. Verfahren zur Durchführung einer Schädlingsprognose, umfassend:
bei einer Vielzahl von Fallen (1), Erfassen von Daten (10) umfassend: Bilder von Falleninhalten und zugehörige Metadaten, die für eine bestimmte Zeitspanne erfasst wurden (10a), und andere Daten (10b) umfassend die GPS-Koordinaten der jeweiligen Falle; und Senden der Daten (10, 10a, 10b) durch Kommunikationsmittel an ein Remote End (2), das sich in der Cloud befindet;
aus den Bildern von Falleninhalten und zugehörigen Metadaten (10a), die in jeder Falle (1) erfasst wurden, Anwenden einer visuellen Verarbeitungs- und Lernstufe (21) umfassend Anwenden eines Vorhersagemodells (22) zum Schätzen einer Anzahl identifizierter Insekten (31) in jeder Falle (1) für die bestimmte Zeitspanne; Vorverarbeiten (25) zumindest der geschätzten Anzahl identifizierter Insekten (31) in jeder Falle (1), der den Bildern zugeordneten Metadaten und der anderen in jeder Falle (1) erfassten Daten (10b), wodurch ein Satz vorverarbeiteter Daten (32) erhalten wird, wobei die Vorverarbeitung (25) das Anwenden maschineller Lernverfahren umfasst, wobei die Vorverarbeitung (25) die Erzeugung von Merkmalen umfasst, die die geschätzte Anzahl identifizierter Insekten (31) in jeder Falle (1), die den Bildern zugeordneten Metadaten und die anderen in jeder Falle (1) erfassten Daten (10b) codieren, in einer Form zur Verarbeitung mit maschinellen Lern- und Entscheidungsfindungsalgorithmen;
Speicherung der vorverarbeiteten Daten (32) in Datenspeichermitteln (27), wodurch historische Daten mit der Zeit erhalten bleiben;
aus den kürzlich vorverarbeiteten Daten (32) und den historischen Daten, Durchführen einer Schädlingsprognose (33) für jede Falle (1) für die nächsten N Tage durch Anwenden von Entscheidungsfindungsalgorithmen (26), wobei das Durchführen einer Schädlingsprognose (33) umfasst:
Zuführen (35) eines maschinellen Lernmodells (28) mit den historischen Daten und Erhalten von Ergebnissen (36) des ausgeführten Modells (28);
Erstellen numerischer oder qualitativer Vorhersagen (29, 38) aus dem Ergebnis (36) der Anwendung des maschinellen Lernmodells (28);
Speichern der Vorhersagen in Datenspeichermitteln (27);
Anreichern der Entscheidungsfindungsalgorithmen (26) mit den Vorhersagen (29).

2. Verfahren nach Anspruch 1, wobei die anderen an jeder Falle (1) erfassten Daten (10b) erfasste Temperatur- und Feuchtigkeitsdaten von an den jeweiligen Fallen (1) angeordneten Sensoren umfassen.

3. Verfahren nach Anspruch 1 oder 2, das ferner das Senden von Daten (11) aus externen Quellen über Kommunikationsmittel an das in der Cloud befindliche Remote End (2) umfasst, wobei die Daten (11) Wetterinformationen und -vorhersagen umfassen.

4. Verfahren nach Anspruch 3, wobei die von externen Quellen bereitgestellten Daten (11) auch historische Schädlingsmigrationsdaten umfassen.

5. Verfahren nach einem der vorhergehenden Ansprüche, ferner umfassend das Senden von Daten (12) durch Kommunikationsmittel, die von Fallenbenutzern bereitgestellt werden, wobei die Daten (12) den Pflanzenschutz umfassen, der auf Fallen der jeweiligen Benutzer angewendet wird.

6. Verfahren nach einem der vorhergehenden Ansprüche, wobei der Schritt des Schätzens einer Anzahl von Insekten (31) in jeder Falle (1) innerhalb einer bestimmten Zeitspanne weiterhin umfasst:
Aktualisieren und Trainieren des Vorhersagemodells (22) mit Trainingsdaten (24);
manuelles Überprüfen und Korrigieren möglicher Fehler (23) bei der Schätzung der Schädlingsanzahl (31)
Anreichern der Trainingsdaten (24) mit der aktualisierten Anzahl der Schädlinge (31) und mit den manuell korrigierten Fehlern (23) bei der Schätzung der Anzahl der Schädlinge (31).

7. Verfahren nach einem der vorhergehenden Ansprüche, wobei die Vorverarbeitung (25) mindestens eines der folgenden umfasst: Datenbereinigung, automatische Datenetikettierung, automatische Trenderkennung, Behandlung fehlender Daten und automatische Erkennung und Korrektur von Ausreißern.

8. Verfahren nach einem der vorhergehenden Ansprüche, wobei die durchgeführte Schädlingsprognose (33) entweder in Form einer numerischen Vorhersage oder einer Angabe eines Entwicklungsstadiums des beobachteten Schädlings in einem Zeitintervall oder einer Pflanzenschutzempfehlung erfolgt.

9. Verfahren nach Anspruch 1, wobei das maschinelle Lernmodell (28) mindestens eine der folgenden Techniken umfasst: maschinelles Klassifikationslernen, Ansätze zur Kombination mehrerer Modelle (z. B. Ensemble-Lernen) und kostensensitives Lernen.

10. Verfahren nach einem der vorhergehenden Ansprüche, wobei die für eine Falle (1) durchgeführte Schädlingsprognose (33) zumindest auf den Fallen basiert, die zu einem geografischen Interessenort gehören, wobei der geografische Interessenort ein Gebiet ist, das durch einen bestimmten Radius vom Standort der Falle definiert ist, oder ein Cluster von Fallen, die nicht notwendigerweise innerhalb eines bestimmten Radius angeordnet sind.

11. Ein System zur Durchführung einer Schädlingsprognose, umfassend:
eine Vielzahl von Fallen (1), die an verschiedenen Orten in einem Erntefeld angeordnet sind, wobei jede Falle (1) eine Kamera zum Erfassen von Bildern des Falleninhalts, Geolokalisierungsmittel zum Abrufen des Standorts der jeweiligen Falle (1) und Kommunikationsmittel zum Senden der erfassten Daten umfasst;
Computermittel (2), die in der Cloud angeordnet sind, wobei die Computermittel Speicher- und Verarbeitungskapazität umfassen;
Kommunikationsmittel zum Austausch von Daten zwischen der Vielzahl von Fallen (1) und den Computermitteln (2);
wobei die Computermittel konfiguriert sind zum:
Empfangen von Daten (10, 10a, 10b), die an der Vielzahl von Fallen (1) erfasst wurden, wobei die Daten Bilder des Falleninhalts und zugehörige Metadaten, die für eine bestimmte Zeitspanne erfasst wurden (10a), und andere Daten (10b) umfassend die GPS-Koordinaten der jeweiligen Falle umfassen;
Anwenden einer visuellen Verarbeitungs- und Lernstufe (21), die das Anwenden eines Vorhersagemodells (22) zum Schätzen einer Anzahl von identifizierten Insekten (31) in jeder Falle (1) für die bestimmte Zeitspanne umfasst, aus den Bildern von Falleninhalten und zugehörigen Metadaten (10a), die in jeder Falle (1) für eine bestimmte Zeitspanne erfasst wurden;
Vorverarbeiten (25) zumindest der geschätzten Anzahl identifizierter Insekten (31) in jeder Falle (1), der den Bildern zugeordneten Metadaten und der anderen in jeder Falle (1) erfassten Daten (10b), wodurch ein Satz vorverarbeiteter Daten (32) erhalten wird, wobei die Vorverarbeitung (25) die Anwendung maschineller Lerntechniken umfasst, wobei die Vorverarbeitung (25) die Erzeugung von Merkmalen umfasst, die die geschätzte Anzahl identifizierter Insekten (31) in jeder Falle (1), die den Bildern zugeordneten Metadaten und die anderen in jeder Falle (1) erfassten Daten (10b) codieren;
Speicherung der vorverarbeiteten Daten (32) in Datenspeichermitteln (27), wodurch
historische Daten mit der Zeit erhalten bleiben;
aus den kürzlich vorverarbeiteten Daten (32) und den historischen Daten, Durchführen einer Schädlingsprognose (33) für jede Falle (1) für die nächsten N Tage durch Anwendung von Entscheidungsfindungsalgorithmen (26) durchzuführen, wobei die Durchführung einer Schädlingsprognose (33) umfasst:
Zuführen (35) eines maschinellen Lernmodells (28) mit den historischen Daten und Erhalten von Ergebnissen (36) des ausgeführten Modells (28);
Erstellen numerischer oder qualitativer Vorhersagen (29, 38) aus dem Ergebnis (36) der Anwendung des maschinellen Lernmodells (28);
Speichern der Vorhersagen in Datenspeichermitteln (27);
Anreichern der Entscheidungsfindungsalgorithmen (26) mit den Vorhersagen (29).

12. System nach Anspruch 11, wobei die Kommunikationsmittel drahtlos sind.

13. System nach einem der Ansprüche 11-12, wobei mindestens einige der mehreren Fallen (1) Wettersensoren konfiguriert um Wetterdaten von der Falle (1) zu sammeln umfassen.

14. Computerprogramm mit einem Computerprogrammcode-Mittel, das geeignet ist, die Schritte des Verfahrens nach einem der Ansprüche 1 bis 10 auszuführen, wenn das Programm auf einem Computer, einem digitalen Signalprozessor, einem feldprogrammierbaren Gate-Array, einer anwendungsspezifischen integrierten Schaltung, einem Mikroprozessor, einem Mikrocontroller oder einer anderen Form von programmierbarer Hardware ausgeführt wird.

## Revendications

1. Procédé pour effectuer une prévision de nuisibles, comprenant :
au niveau d'une pluralité de pièges (1), la saisie de données (10) comprenant : des images du contenu des pièges et des métadonnées associées saisies pendant une certaine période de temps (10a) et d'autres données (10b) comprenant les coordonnées GPS du piège considéré ; et l'envoi desdites données (10, 10a, 10b) via des moyens de communication à une extrémité distante (2) située dans le nuage ;
à partir des images du contenu des pièges et des métadonnées associées (10a) saisies à chaque piège (1), l'application d'une étape de traitement visuel et d'apprentissage (21) comprenant l'application d'un modèle prédictif (22) pour estimer un nombre d'insectes identifiés (31) dans chaque piège (1) pour ladite certaine période de temps ; le prétraitement (25) dudit au moins un nombre estimé d'insectes identifiés (31) dans chaque piège (1), desdites métadonnées associées aux images et desdites autres données (10b) saisies à chaque piège (1), obtenant ainsi un ensemble de données prétraitées (32), ledit prétraitement (25) comprenant l'application de techniques d'apprentissage automatique, ledit prétraitement (25) comprenant la génération de caractéristiques codant ledit nombre estimé d'insectes identifiés (31) dans chaque piège (1), lesdites métadonnées associées aux images et lesdites autres données (10b) saisies à chaque piège (1), sous une forme permettant le traitement avec des algorithmes d'apprentissage automatique et de prise de décision ;
le stockage des données prétraitées (32) dans des moyens de stockage de données (27), conservant ainsi dans le temps des données historiques ;
à partir des données récemment prétraitées (32) et des données historiques, réalisation d'une prévision de nuisibles (33) pour chaque piège (1) pour les N jours suivants en appliquant des algorithmes de prise de décision (26), la réalisation d'une prévision de nuisibles (33) comprenant :
l'alimentation (35) d'un modèle d'apprentissage automatique (28) avec lesdites données historiques et l'obtention de résultats (36) du modèle (28) exécuté ;
la réalisation de prédictions chiffrées ou qualitatives (29, 38) à partir du résultat (36) de l'application dudit modèle d'apprentissage automatique (28) ;
le stockage desdites prédictions dans des moyens de stockage de données (27) ;
l'enrichissement desdits algorithmes de prise de décision (26) avec lesdites prédictions (29).

2. Procédé selon la revendication 1, dans lequel lesdites autres données (10b) saisies à chaque piège (1) comprennent des données de température et d'humidité prises par des capteurs disposés au niveau des pièges considérés (1).

3. Procédé selon la revendication 1 ou 2, comprenant en outre l'envoi à ladite extrémité distante (2) située dans le nuage, via des moyens de communication, de données (11) provenant de sources externes, lesdites données (11) comprenant des informations et des prévisions météorologiques.

4. Procédé selon la revendication 3, dans lequel lesdites données (11) fournies par des sources externes comprennent également des données historiques de migration de nuisibles.

5. Procédé selon l'une quelconque des revendications précédentes, comprenant en outre l'envoi, par des moyens de communication, de données (12) fournies par des utilisateurs de pièges, lesdites données (12) comprenant la protection des cultures appliquée aux pièges des utilisateurs considérés.

6. Procédé selon l'une quelconque des revendications précédentes, dans lequel l'étape d'estimation d'un nombre d'insectes (31) à chaque piège (1) au cours d'une certaine période de temps comprend en outre :
l'actualisation et l'apprentissage dudit modèle prédictif (22) avec des données d'apprentissage (24) ;
la vérification et la correction manuelles d'éventuelles erreurs (23) dans l'estimation du nombre de nuisibles (31) ;
l'enrichissement desdites données d'apprentissage (24) avec le nombre de nuisibles (31) actualisé et avec les erreurs (23) corrigées manuellement dans l'estimation du nombre de nuisibles (31).

7. Procédé selon l'une quelconque des revendications précédentes, dans lequel ledit prétraitement (25) comprend au moins l'un des éléments suivants : le nettoyage des données, l'étiquetage automatique des données, la détection automatique des tendances, le traitement des données manquantes et la détection et la correction automatiques des valeurs aberrantes.

8. Procédé selon l'une quelconque des revendications précédentes, dans lequel la prévision de nuisibles (33) réalisée se présente sous la forme soit d'une prédiction chiffrée, soit d'une indication d'un stade de développement du nuisible observé dans un intervalle de temps, soit d'une recommandation de protection des cultures.

9. Procédé selon la revendication 1, dans lequel ledit modèle d'apprentissage automatique (28) comprend au moins l'une des techniques suivantes : apprentissage automatique de classification, approches pour combiner plusieurs modèles (par exemple, apprentissage d'ensemble) et apprentissage sensible aux coûts.

10. Procédé selon l'une quelconque des revendications précédentes, dans lequel la prévision de nuisibles (33) réalisée pour un piège (1) est basée au moins sur les pièges appartenant à une géolocalisation d'intérêt, la géolocalisation d'intérêt étant une zone définie par un certain rayon à partir de l'emplacement dudit piège ou d'un groupe de pièges non nécessairement disposés dans un certain rayon.

11. Système pour effectuer une prévision de nuisibles, comprenant :
une pluralité de pièges (1) disposés à différents endroits dans un champ de culture, chaque piège (1) comprenant une caméra pour saisir des images du contenu du piège, des moyens de géolocalisation pour récupérer l'emplacement du piège considéré (1) et des moyens de communication pour envoyer les données saisies ;
des moyens informatiques (2) situés dans le nuage, lesdits moyens informatiques comprenant une capacité de stockage et de traitement ;
des moyens de communication pour échanger des données entre ladite pluralité de pièges (1) et lesdits moyens informatiques (2) ;
lesdits moyens informatiques étant configurés pour :
recevoir des données (10, 10a, 10b) capturées à ladite pluralité de pièges (1), lesdites données comprenant des images du contenu des pièges et des métadonnées associées saisies pendant une certaine période de temps (10a) et d'autres données (10b) comprenant les coordonnées GPS du piège considéré ;
à partir des images du contenu des pièges et des métadonnées associées (10a) saisies à chaque piège (1) pendant une certaine période de temps (10a), l'application d'une étape de traitement visuel et d'apprentissage (21) comprenant l'application d'un modèle prédictif (22) pour l'estimation d'un nombre d'insectes identifiés (31) dans chaque piège (1) pendant ladite certaine période de temps ;
le prétraitement (25) au moins dudit nombre estimé d'insectes identifiés (31) dans chaque piège (1), desdites métadonnées associées aux images et desdites autres données (10b) saisies à chaque piège (1), obtenant ainsi un ensemble de données prétraitées (32), ledit prétraitement (25) comprenant l'application de techniques d'apprentissage automatique, ledit prétraitement (25) comprenant la génération de caractéristiques codant ledit nombre estimé d'insectes identifiés (31) dans chaque piège (1), lesdites métadonnées associées aux images et lesdites autres données (10b) saisies à chaque piège (1) ;
le stockage des données prétraitées (32) dans des moyens de stockage de
données (27), conservant ainsi dans le temps des données historiques ;
à partir des données récemment prétraitées (32) et des données historiques, réalisation d'une prévision de nuisibles (33) pour chaque piège (1) pour les N jours suivants en appliquant des algorithmes de prise de décision (26), la réalisation d'une prévision de nuisibles (33) comprenant :
l'alimentation (35) d'un modèle d'apprentissage automatique (28) avec lesdites données historiques et l'obtention de résultats (36) du modèle exécuté (28) ;
la réalisation de prédictions chiffrées ou qualitatives (29, 38) à partir du résultat (36) de l'application dudit modèle d'apprentissage automatique (28) ;
le stockage desdites prédictions dans des moyens de stockage de données (27) ;
l'enrichissement desdits algorithmes de prise de décision (26) avec lesdites prédictions (29).

12. Système selon la revendication 11, dans lequel lesdits moyens de communication sont sans fil.

13. Système selon l'une quelconque des revendications 11-12, dans lequel au moins certains pièges de ladite pluralité de pièges (1) comprennent des capteurs météorologiques configurés pour recueillir des données météorologiques provenant du piège (1).

14. Programme d'ordinateur comprenant des moyens de code de programme d'ordinateur adaptés pour exécuter les étapes du procédé selon l'une quelconque des revendications de 1 à 10 lorsque ledit programme est exécuté sur un ordinateur, un processeur de signaux numériques, une matrice prédiffusée programmable par l'utilisateur, un circuit intégré spécifique à une application, un microprocesseur, un microcontrôleur, ou toute autre forme de matériel programmable.
